# EUROPEAN PATENT APPLICATION

(11) **EP 4 748 814 A1**
(43) Date of publication of application: **27.05.2026**
(21) Application number: 24874347.8
(22) Date of filing: 08.08.2024
(51) Int. Cl.: C04B 35/66, F27D 1/10, F27D 1/16

(54) **POURING MATERIAL FOR FIRING FURNACE**

(30) Priority: 03.10.2023 JP 2023172234
(71) Applicant: Krosakiharima Corporation, Kitakyushu-shi, Fukuoka 806-8586 (JP)
(72) Inventor: KOGA, Masanori, Kitakyushu-shi, Fukuoka 806-8586 (JP); KAWABE, Yuusuke, Kitakyushu-shi, Fukuoka 806-8586 (JP); TOKUTOMI, Atsushi, Kitakyushu-shi, Fukuoka 806-8586 (JP)
(74) Representative: Vossius & Partner Patentanwälte Rechtsanwälte mbB
(86) International application number: PCT/JP2024/028445
(87) International publication number: WO 2025/074733

(57) **Abstract**

The present invention provides a castable material for a firing furnace, which is capable of eliminating the need for a drying step after casting, and of suppressing alkali attack and physical impacts from furnace contents. The castable material according to the present invention comprises: a refractory raw material mixture containing: 75% by mass or more in total of one or more selected from the group consisting of an alumina raw material, an alumina-silica raw material, and a silicon carbide raw material; and 1% by mass to 15% by mass of silica flour, with a remainder in which a content rate of a CaO component derived from alumina cement is 0.5% by mass or less (including zero); and colloidal silica added to the refractory raw material mixture at an addition rate of 0.5% by mass to 5% by mass in terms of an SiO₂ component thereof.

## Description

### TECHNICAL FIELD

The present invention relates to a castable material for a firing furnace such as an incinerator, a fluidized-bed furnace, an industrial waste kiln/treatment furnace, a circulating fluidized bed (CFB) boiler furnace, a cement production facility furnace, a gasification melting furnace, or a stoker furnace.

### BACKGROUND ART

The term "castable material" is a general term for unshaped refractory materials installable by casting, and is also referred to as "castable refractory material" or "castable." As such castable materials, a type of castable material using cement (such as alumina cement, Portland cement, or magnesia cement) as a binder is commonly used. However, when cement is used as a binder, a hydration reaction occurs at room temperature, thereby increasing the strength of a refractory body installed by casting (hereinafter referred to as "cast body"). This makes dewatering difficult, leading to the risk of explosive spalling when the temperature in the furnace rises. Therefore, since it is necessary to carry out a drying process after casting, there is a problem in that the drying process incurs high costs and requires a long period of operational shutdown.

On the other hand, a castable material using silica sol, i.e., colloidal silica, as a binder is also known (see, for example, Patent Documents 1 to 4). However, in a firing furnace, such as an incinerator, in which furnace contents are subjected to heat treatment (firing or incineration), a cast body that serves as a furnace wall of the firing furnace has a problem in that it is susceptible to physical impacts and erosive reactions from the furnace contents flowing within the furnace.

### PRIOR ART DOCUMENTS

### [Patent Document]

Patent Document 1: JP 2015-168596 A
Patent Document 2: JP 2018-111612 A
Patent Document 3: JP 2019-119653 A
Patent Document 4: JP 2019-142727 A

### SUMMARY OF INVENTION

### [Technical Problem]

The present inventors conducted detailed research on erosive reactions occurring in firing furnaces. As a result, it was found that, in firing furnaces, erosion caused by alkali components (such as Na₂O, K₂O, and CaO) derived from furnace contents, so-called "alkali attack", is a major factor in the erosive reactions. Specifically, in firing furnaces, a working surface (the surface of a cast body) becomes low in viscosity due to alkali attack, thereby allowing alkalis to easily penetrate into the cast body. Then, the resulting difference in expansion between an alkali-penetrated layer and an alkali-unpenetrated layer causes delamination or the like, leading to the progression of erosion.

In view of the above, the technical problem to be solved by the present invention is to provide a castable material for a firing furnace, which is capable of eliminating the need for a drying step after casting, and of suppressing alkali attack and physical impacts from furnace contents.

### [Solution to Technical Problem]

The present inventors have conducted tests and research on castable materials using colloidal silica as a binder in order to obtain means for suppressing alkali penetration caused by alkali attack, and consequently have obtained the finding that it is effective to generate high-viscosity glass at the surface of a cast body (working surface). The inventors have further found that, to this end, it is important to control the amount of silicate bond in the matrix of the cast body, and more specifically to allow a refractory raw material mixture for a castable material to contain silica flour at a content rate falling within a specified range, and to set an addition rate of colloidal silica to fall within a specified range in terms of an SiO₂ component thereof.

The present invention has been conceived based on these findings and technical ideas, and according to one aspect thereof, the following castable material for a firing furnace is provided.

"A castable material for a firing furnace, comprising: a refractory raw material mixture that contains: 75% by mass or more in total of one or both of an alumina-silica raw material, and an alumina raw material except for calcined alumina; 1% by mass to 15% by mass of silica flour; and 4% by mass to 10% by mass of calcined alumina, with a remainder in which a content rate of a CaO component derived from alumina cement is 0.5% by mass or less (including zero); and colloidal silica added to the refractory raw material mixture at an addition rate of 0.5% by mass to 5% by mass in terms of an SiO₂ component thereof."

According to another aspect of the present invention, the following castable material for a firing furnace is provided.

"A castable material for a firing furnace, comprising: a refractory raw material mixture that contains: 75% by mass or more of a silicon carbide raw material; and 1% by mass to 15% by mass of silica flour, with a remainder in which a content rate of a CaO component derived from alumina cement is 0.5% by mass or less (including zero); and colloidal silica added to the refractory raw material mixture at an addition rate of 0.5% by mass to 5% by mass in terms of an SiO₂ component thereof."

### [Advantageous Effects of Invention]

The present invention makes it possible to eliminate the need for a drying step after casting, and to suppress alkali attack and physical impacts from furnace contents.

### DESCRIPTION OF EMBODIMENTS

A castable material for a firing furnace according to the present invention (hereinafter referred to simply as "castable material of the present invention") comprises a refractory raw material mixture that contains: 75% by mass or more in total of one or more selected from the group consisting of an alumina raw material, an alumina-silica raw material, and a silicon carbide raw material; 1% by mass to 15% by mass of silica flour, with the remainder in which a content rate of a CaO component derived from alumina cement is 0.5% by mass or less (including zero); and colloidal silica added to the refractory raw material mixture at an addition rate of 0.5% by mass to 5% by mass in terms of an SiO₂ component thereof.

As just described, in the castable material of the present invention, the refractory raw material mixture is characterized in that it contains: one or more selected from the group consisting of an alumina raw material, an alumina-silica raw material, and a silicon carbide raw material, as main materials; and 1% by mass to 15% by mass of silica flour, with the remainder in which the content rate of a CaO component derived from alumina cement is 0.5% by mass or less (including zero).

If the content rate of silica flour is less than 1% by mass, a sufficient silicate bond is not formed in the matrix of the cast body. Accordingly, neither the effect of suppressing alkali penetration nor the effect of suppressing physical impacts from furnace contents can be obtained. On the other hand, when the content rate of silica flour exceeds 15% by mass, the cast body becomes excessively densified because silica flour is a fine powder. This poses a risk that explosive spalling occurs when the temperature inside the furnace rises. Further, in the particle size composition of the refractory raw material mixture, the content rate of the fine powder excessively increases, and the content rate of aggregate relatively decreases. As a result, the compressive strength of the cast body decreases, thereby reducing the effect of suppressing physical impacts from furnace contents. Preferably, the content rate of silica flour is 3% by mass to 10% by mass.

Further, in the present invention, the content rate of a CaO component derived from alumina cement in the refractory raw material blend is limited to 0.5% by mass or less (including zero). This is because the CaO component derived from alumina cement promotes alkali penetration caused by alkali attack. Moreover, as mentioned above, the CaO component derived from alumina cement is liable to explosive spalling, and thus gives rise to the need for a drying step after casting. From these viewpoints, the content rate of the CaO component derived from alumina cement is preferably reduced as much as possible, and most preferable, reduced to zero.

In the castable material of the present invention, the refractory raw material mixture preferably contains calcined alumina in an amount of 4% by mass to 10% by mass. By incorporating calcined alumina within this range, the cast body becomes moderately densified, thereby improving the effect of suppressing alkali penetration and the effect of suppressing physical impacts from furnace contents. In the present invention, calcined alumina shall not fall under an alumina raw material that is one of the main materials of the refractory raw material mixture. That is, in the present invention, the content rate of the alumina raw material shall not include the content rate of calcined alumina.

As mentioned above, in the present invention, colloidal silica is used as a binder, and the addition rate of the colloidal silica (i.e., the rate of the colloidal silica to be added with respect to and in addition to 100% by mass of the refractory raw material mixture) is set in the range of 0.5% by mass to 5% by mass in terms of an SiO₂ component thereof. If the addition rate of colloidal silica (which means the addition rate in terms of the SiO₂ component; the same applies hereinafter) is less than 0.5% by mass, a sufficient silicate bond is not formed in the matrix of the cast body. This results in insufficient effects of suppressing alkali penetration and suppressing physical impacts from furnace contents. On the other hand, if the addition rate of colloidal silica exceeds 5% by mass, the density of the cast body is excessively reduced due to an increase in porosity of the cast body, etc., and the compressive strength of the cast body is also reduced. As a result, the effect of suppressing alkali penetration and the effect of suppressing physical impacts from furnace contents are reduced. The addition rate of colloidal silica is preferably 1.5% by mass to 5% by mass.

In the present invention, colloidal silica is added as a binder to the refractory raw material mixture. In addition to colloidal silica, various additives, such as a dispersant, a hardening regulator, and an explosive spalling inhibiter, may also be appropriately added or incorporated. The dispersant is added to create fluidity during casting, and specific examples thereof include: inorganic salts such as sodium tripolyphosphate, sodium hexametaphosphate, sodium ultra-phosphate, acidic sodium hexametaphosphate, sodium borate, sodium carbonate, and polymetaphosphate; sodium citrate; sodium tartrate; sodium polyacrylate; sodium sulfonate; polycarboxylates; β-naphthalenesulfonates; and naphthalenesulfonic acid. The hardening regulator includes a hardening accelerator and a hardening retardant. Specific examples of the hardening accelerator include hydrated lime, calcium chloride, gypsum (calcium sulphate), magnesia, sodium aluminate, and lithium carbonate. Specific examples of the hardening retardant include boric acid, oxalic acid, citric acid, gluconic acid, sodium carbonate, and sugar.

Specific examples of the explosive spalling inhibiter include organic fibers, organic foaming agents, basic aluminum lactate, and metallic aluminum. Specific examples of the organic fibers include polymeric organic fibers, such as vinylon (including polyvinyl alcohol), rayon, polyester, nylon, polypropylene, and polyethylene.

As in the colloidal silica added as a binder, these additives are added with respect to and in addition to 100% by mass of the refractory raw material mixture. The addition rate thereof may be at a level equivalent to that in a commonly-used castable material.

In addition to the above-mentioned refractory raw material mixture, binder, and additives, the castable material of the present invention may further adopt large coarse particles having a particle size of 8 mm or more. These large coarse particles have a role in preventing the propagation of cracks generated in the refractory micro structure. As the material of the large coarse particles, one or more selected from the group consisting of alumina, alumina-silica, and silicon carbide may be adopted, as with the main material of the refractory raw material mixture. However, in the castable material of the present invention, the large coarse particles shall not be included in the refractory raw material mixture. That is, in the castable material of the present invention, the large coarse particles are added with respect to and in addition to 100% by mass of the refractory raw material mixture. In other words, in the castable material of the present invention, the refractory raw material mixture is a mixture of refractory raw materials having a particle size of less than 8 mm.

### EXAMPLES

Table 1 shows raw material compositions and evaluation results of the Inventive Examples and Comparative Examples. Evaluation items and evaluation methods for Inventive Examples and Comparative Examples are as follows.

### < Alkali Penetration Resistance >

After adding a predetermined amount of water to a raw material composition of each example, and kneading them, the resulting kneaded mixture was formed into a prism-shaped test piece having a size of 70 × 70 × 65 mm, and a hole having a diameter of 30 mm and a depth of 35 mm was formed in the test piece to obtain a crucible-like test piece. 20 g of sodium carbonate (commercially available product) was put into the hole of the crucible-like test piece, and then the crucible-like test piece was subjected to heat treatment at 1200°C for 12 hours. After the heat treatment, the crucible-like test piece was left to cool to room temperature (subjected to natural cooling). Subsequently, the crucible-like test piece was cut along its central axis (an axial section of the hole), and the cut surface was observed. In observation of the cut surface, the remaining thickness of maximally eroded area was measured, and a remaining rate with respect to the pre-test thickness of the test piece was calculated. Alkali penetration resistance was evaluated by an erosion index that is calculated on the basis of the remaining rate of Comparative Example as a reference value "100." A smaller erosion index indicates better alkali penetration resistance, i.e., a higher effect of suppressing alkali penetration due to alkali attack. A test piece that had an erosion index of less than 80 was evaluated as ⊚ (good), and a test piece that had an erosion index of 80 to less than 90 was evaluated as ○ (acceptable). Further, a test piece that had an erosion index of 90 to less than 100 was evaluated as △ (unacceptable), and a test piece that had an erosion index of 100 or more was evaluated as × (NG).

### < Explosive Spalling Resistance >

After adding a predetermined amount of water to the raw material composition of each example, and kneading them, the resulting kneaded mixture was poured into a cylindrical formwork having a diameter of 100 mm and a height of 100 mm, and cured for 24 hours, whereafter the cured body was detached from the formwork to obtain two columnar test pieces. Each of the two columnar test pieces was put in an electric furnace at a temperature of 900 °C and heated. Then, after the elapse of a holding time of 30 min, they were extracted from the electric furnace. For each of the extracted test pieces, the presence or absence of explosive spalling and the presence or absence of crack formation were checked and evaluated. In the evaluation, each of the two test pieces was evaluated in the following manner. A test piece that had no occurrence of cracks or the like was evaluated as ⊚ (good), and a test piece that had occurrence of minute cracks was evaluated as o (acceptable). Further, a test piece that had occurrence of partial breakage of a surface layer was evaluated as △ (unacceptable), and a test piece that was broken, or damaged in 50% or more of its entirety was evaluated as × (NG). The inventors have confirmed that a castable material whose explosive spalling resistance is evaluated as ⊚ (good) or o (acceptable) does not require a drying step after casting in an actual furnace.

### < Abrasion Resistance >

After adding a predetermined amount of water to the raw material composition of each example, and kneading them, the resulting kneaded mixture was poured into a formwork having a size of 115 × 115 × 65 mm, and cured for 24 hours, whereafter the cured body was detached from the formwork, and dried to obtain a test pieces. The obtained test piece was subjected in advance to heat treatment at 800°C for 5 hours. The heat-treated test piece was measured in accordance with ASTM C704 (Abrasion Resistance of Refractory Materials at Room Temperature). Specifically, the test piece was placed such that a 115 × 115 mm surface thereof was inclined at 45° with respect to a discharge direction of an abrasive material. Then, while rotating the test piece at 15 rpm about a vertical center line of the 115 × 115 mm surface as a rotation axis, 1 kg of the abrasive material was continuously blasted onto the 115 × 115 mm surface. As the abrasive material, silicon carbide particles having a particle size adjusted to 1 to 0.3 mm were used. A blasting air pressure was set to 0.4 MPa. The mass of the test piece before and after the test was measured, and wear volume was calculated from a mass change and the bulk specific gravity of the test piece. Abrasion resistance was evaluated by an abrasion index that is calculated on the basis of the wear volume of Comparative Example as a reference value "100." A smaller abrasion index indicates better abrasion resistance, i.e., a higher effect of suppressing physical impacts from furnace contents. A test piece that had an abrasion index of less than 80 was evaluated as ⊚ (good), and a test piece that had an abrasion index of 80 to less than 90 was evaluated as o (acceptable). Further, a test piece that had an abrasion index of 90 to less than 100 was evaluated as △ (unacceptable), and a test piece that had an abrasion index of 100 or more was evaluated as × (NG).

### < Comprehensive Evaluation >

A test piece that had ⊚ regarding all the evaluation items: alkali penetration resistance, explosive spalling resistance, and abrasion resistance was comprehensively evaluated as ⊚ (good), and test piece that had o regarding at least one of the evaluation items was comprehensively evaluated as ○ (acceptable). Further, a test piece that had △ regarding at least one of the evaluation items was comprehensively evaluated as △ (unacceptable), and a test piece that had× regarding at least one of the evaluation items was comprehensively evaluated as × (NG). That is, the comprehensive evaluation indicates that evaluation becomes worse in the order of ⊚, ○, △, and ×, and a test piece that had a comprehensive evaluation of ⊚ or ○ was determined as a qualified castable material, whereas a test piece that had a comprehensive evaluation of △ or × was determined as an unqualified castable material.

[Table 1]

**Table 1**

| | Comparative Example 1 | Inventive Example 1 | Inventive Example 2 | Inventive Example 3 | Inventive Example 4 | Inventive Example 5 | Comparative Example 2 | Inventive Example 6 | Inventive Example 7 | Comparative Example 3 |
|---|---|---|---|---|---|---|---|---|---|---|
| Alumina raw material (mass%) | 92,5 | 92 | 90 | 86 | 83 | 78 | 75 | 88 | 85,5 | 83 |
| Alumina-silica raw material (mass%)) | | | | | | | | | | |
| Silicon carbide raw material (mass%) | | | | | | | | | | |
| Calcined alumina (mass%) | 7 | 7 | 7 | 7 | 7 | 7 | 7 | 7 | 7 | 7 |
| Silica flour (mass%) | 0,5 | 1 | 3 | 7 | 10 | 15 | 18 | 5 | 5 | 5 |
| Alumina cement (mass%) | | | | | | | | | 2,5 | 5 |
| Total of refractory raw materials (mass%) | 100 | 100 | 100 | 100 | 100 | 100 | 100 | 100 | 100 | 100 |
| Colloidal silica (mass%) | 9 | 9 | 9 | 9 | 9 | 9 | 9 | 9 | 9 | 9 |
| CaO component derived from alumina cement (mass%) | | | | | | | | | 0,5 | 1 |
| SiO₂ component in Colloidal silica (mass%) | 3 | 3 | 3 | 3 | 3 | 3 | 3 | 3 | 3 | 3 |
| Alkali penetration resistance | × | ○ | ⊚ | ⊚ | ⊚ | ○ | ○ | ⊚ | ○ | × |
| Explosive spalling resistance | ⊚ | ⊚ | ⊚ | ⊚ | ⊚ | ○ | × | ⊚ | ○ | × |
| Abrasion resistance | × | ○ | ⊚ | ⊚ | ⊚ | ○ | △ | ⊚ | ⊚ | ⊚ |
| Comprehensive Evaluation | × | ○ | ⊚ | ⊚ | ⊚ | ○ | × | ⊚ | ○ | × |

| | Reference Example 8 | Inventive Example 9 | Inventive Example 10 | Inventive Example 11 | Inventive Example 12 | Inventive Example 13 | Comparative Example 4 | Inventive Example 14 | Inventive Example 15 | Inventive Example 16 | Comparative Example 5 |
|---|---|---|---|---|---|---|---|---|---|---|---|
| Alumina raw material (mass%) | 95 | 91 | 85 | 45 | | | 88 | 88 | 88 | 88 | 88 |
| Alumina-silica raw material (mass%)) | | | | 43 | | | | | | | |
| Silicon carbide raw material (mass%) | | | | | 88 | 95 | | | | | |
| Calcined alumina (mass%) | | 4 | 10 | 7 | 7 | | 7 | 7 | 7 | 7 | 7 |
| Silica flour (mass%) | 5 | 5 | 5 | 5 | 5 | 5 | 5 | 5 | 5 | 5 | 5 |
| Alumina cement (mass%) | | | | | | | | | | | |
| Total of refractory raw materials (mass%) | 1 100 | 100 | 100 | 100 | 100 | 100 | 100 | 100 | 100 | 100 | 100 |
| Colloidal silica (mass%) | 9 | 9 | 9 | 9 | 9 | 9 | 0,2 | 1,5 | 7,5 | 15 | 24 |
| CaO component derived from alumina cement (mass%) | | | | | | | | | | | |
| SiO₂ component in Colloidal silica (mass%) | 3 | 3 | 3 | 3 | 3 | 3 | 0,07 | 0,5 | 1,5 | 5 | 8 |
| Alkali penetration resistance | O | ⊚ | ⊚ | ⊚ | ⊚ | ⊚ | △ | ○ | ⊚ | ⊚ | × |
| Explosive spalling resistance | ⊚ | ⊚ | ⊚ | ⊚ | ⊚ | ⊚ | ○ | ⊚ | ⊚ | ⊚ | ○ |
| Abrasion resistance | ○ | ⊚ | ⊚ | ⊚ | ⊚ | ⊚ | × | ○ | ⊚ | ⊚ | × |
| Comprehensive Evaluation | ○ | ⊚ | ⊚ | ⊚ | ⊚ | ⊚ | × | ○ | ⊚ | ⊚ | × |

Inventive Examples 1 to 6 are examples in which the main component of the refractory raw material mixture is an alumina raw material, and the content rate of silica flour is varied within the range of the present invention. They had a comprehensive evaluation of ⊚ or ○, i.e., could obtain good results. Among them, Inventive Examples 2 to 4 and 6, in which the content rate of silica flour falls within the preferable range of 3% by mass to 10% by mass, had a comprehensive evaluation of ⊚, i.e., could obtain particularly excellent results.

On the other hand, in Comparative Example 1 which is an example where the content rate of silica flour is below the lower limit of the present invention, alkali penetration resistance and abrasion resistance were significantly reduced. Further, in Comparative Example 2 which is an example where the content rate of silica flour exceeds the upper limit of the present invention, explosive spalling resistance was significantly reduced, and abrasion resistance was also insufficient.

Inventive Example 7 is an example containing 0.5 % by mass of a CaO component derived from alumina cement. When compared with Inventive Example 6 which does not contain the CaO component derived from alumina cement, alkali penetration resistance and explosive spalling resistance were slightly reduced, but remained at a qualified level. On the other hand, in Comparative Example 3 which is an example where the content rate of the CaO component derived from alumina cement is 1% by mass, which exceeds the upper limit of the present invention, alkali penetration resistance and explosive spalling resistance were significantly reduced.

Reference Example 8 is an example which does not contain calcined alumina. When compared with Inventive Example 6 which contains calcined alumina, alkali penetration resistance and abrasion resistance were slightly reduced, but the comprehensive evaluation was at a qualified level. Inventive Examples 9 and 10, which are examples where the content rate of calcined alumina was varied, had a comprehensive evaluation of ⊚, as in Inventive Example 6, i.e., could obtain good results.

Inventive Examples 11 to 13, which are examples where the main material of the refractory raw material was changed but all of which fall within the scope of the present invention, could obtain good results. Here, from a comparison between Inventive Examples 12 and 13, it was found that, when the main material of the refractory raw material mixture is a silicon carbide raw material, good results can be obtained even without containing calcined alumina.

Inventive Examples 14 to 16 are examples where the main material of the refractory raw material mixture was an alumina raw material, and the addition amount of colloidal silica was varied within the range of the present invention. They had a comprehensive evaluation of ⊚ or ○, and could obtain good results. Among them, Inventive Examples 15 and 16, in which the addition amount of colloidal silica falls within a preferable range of 1.5% by mass to 5% by mass, had a comprehensive evaluation of ⊚, and could obtain particularly good results.

On the other hand, in Comparative Example 4, which is an example where the addition rate of colloidal silica is below the lower limit of the present invention, abrasion resistance was significantly reduced, and alkali penetration resistance was also insufficient. Further, in Comparative Example 5, which is an example where the addition rate of colloidal silica exceeds the upper limit of the present invention, both alkali penetration resistance and the abrasion resistance were significantly reduced.

## Claims

1. A castable material for a firing furnace, comprising:
a refractory raw material mixture that contains: 75% by mass or more in total of one or both of an alumina-silica raw material, and an alumina raw material except for calcined alumina; 1% by mass to 15% by mass of silica flour; and 4% by mass to 10% by mass of calcined alumina, with a remainder in which a content rate of a CaO component derived from alumina cement is 0.5% by mass or less (including zero); and
colloidal silica added to the refractory raw material mixture at an addition rate of 0.5% by mass to 5% by mass in terms of an SiO₂ component thereof.

2. A castable material for a firing furnace, comprising:
a refractory raw material mixture that contains: 75% by mass or more of a silicon carbide raw material; and 1% by mass to 15% by mass of silica flour, with a remainder in which a content rate of a CaO component derived from alumina cement is 0.5% by mass or less (including zero); and
colloidal silica added to the refractory raw material mixture at an addition rate of 0.5% by mass to 5% by mass in terms of an SiO₂ component thereof.

3. The castable material as claimed in claim 1 or 2, wherein the content rate of the silica flour is 3% by mass to 10% by mass.

4. The castable material as claimed in claim 1 or 2, wherein the addition rate of the colloidal silica is 1.5% by mass to 5% by mass in terms of an SiO₂ component thereof.
